# EUROPEAN PATENT APPLICATION

(11) **EP 4 494 861 A1**
(43) Date of publication of application: **22.01.2025**
(21) Application number: 24185101.3
(22) Date of filing: 27.06.2024
(51) Int. Cl.: B32B 5/18, B32B 15/04, B32B 21/04, B32B 5/16, B32B 5/20, B32B 7/12

(54) **PANEL AND METHOD FOR MANUFACTURING A PANEL**

(30) Priority: 19.07.2023 US 202363514377 P; 01.09.2023 US 202363579962 P
(71) Applicant: Unilin, BV, 8710 Wielsbeke (BE)
(72) Inventor: Nel, Koen, 8710 Wielsbeke (BE); Mouton, Kenny, 8710 Wielsbeke (BE)
(74) Representative: Unilin Technologies

(57) **Abstract**

A panel, wherein said panel (1) comprises at least a layer-shaped substrate (5), said substrate (5) comprising base particles and a binding material which bonds said base particles together, wherein said base particles comprise comminuted particles from waste comprising rigid foam, for example waste from insulation panels comprising rigid polyurethane foam or rigid polyisocyanurate foam, wherein said waste further comprises facers, such that the comminuted particles comprise rigid foam material derived from the rigid foam and facer material derived from the facers, wherein for the comminuted particles the weight ratio of the rigid foam material to the sum of the rigid foam material and the facer material, is at most 99 percentage, and method for manufacturing such a panel (1).

## Description

This invention relates to panels comprising at least a layer-shaped substrate, said substrate comprising base particles and a binding material which bonds said base particles together, wherein said base particles comprise comminuted particles from waste comprising rigid foam, for example waste from insulation panels comprising rigid polyurethane foam or waste from insulation panels comprising rigid polyisocyanurate foam. This invention also relates to methods for manufacturing such panels.

In particular, this invention relates to construction panels, floor panels, furniture panels or wall panels. These panels can or cannot be decorative panels. If said panels are decorative panels, said panels preferably comprise a decorative top layer attached to said layer-shaped substrate.

Said panels can be made from recycled material, for example recycled material from end-of-life insulation panels comprising rigid polyurethane foam or rigid polyisocyanurate foam, or from production waste derived from the production of insulation panels comprising rigid polyurethane foam or rigid polyisocyanurate foam. For environmental reasons and also because raw materials are not inexhaustible, it is important to make optimal use of said end-of-life insulation panels or said production waste. With end-of-life insulation panels can be indicated panels of the non-exhaustive list: panels that have been used by an end consumer and/or waste from installation, shipping, marketing and/or unsold stock.

The quality of the known panels comprising comminuted particles from waste comprising rigid foam, leaves much to be desired, such that the applications for which these panels can be used are limited. Also for manufacturing these panels, standard production equipment used for other types of panels, such as wood based panels, cannot be used or significant changes need to be made.

It is an object of the present invention to provide alternative panels comprising comminuted particles from waste comprising rigid foam, and alternative methods for manufacturing such panels. Preferably these panels and methods overcome one or more of the abovementioned problems.

According to a first aspect, the invention relates to a panel, wherein said panel comprises at least a layer-shaped substrate, said substrate comprising base particles and a binding material which bonds said base particles together, wherein said base particles comprise comminuted particles from waste comprising rigid foam, for example waste from insulation panels comprising rigid polyurethane foam or rigid polyisocyanurate foam, wherein said waste further comprises facers, such that the comminuted particles comprise rigid foam material derived from the rigid foam and facer material derived from the facers, wherein for the comminuted particles the weight ratio of the rigid foam material to the sum of the rigid foam material and the facer material, is at most 99 percentage.

The term `comminuted particles from waste comprising rigid foam', is often shortened in this description to `comminuted particles'. Surprisingly it has been found that by also using facers/facer material to form said comminuted particles and by having said weight ratio of the rigid foam material to the sum of the rigid foam material and the facer material, of at most 99 percentage, the characteristics of the panels are significantly improved. This facer material contributes to the strength and performance of said panels. A further advantage is that more waste can be recycled/reused. Said waste can be from insulation panels comprising rigid polyurethane foam sandwiched between two facers or from insulation panels comprising rigid polyisocyanurate foam sandwiched between two facers. Said facers can comprise one or more layers, for example one or more layers chosen from: paper layers -such as kraft paper layers/sheets- and metal layers -such as aluminum foils/sheets- and plastic layers -such as thermoplastic based sheets/foils, for example polyethylene sheets/foils- and glass fiber layers.

The comminuted particles comprise rigid foam material derived from the rigid foam and facer material derived from the facers. The comminuted particles can comprise one or more of the following:
- particles comprising only rigid foam material;
- particles comprising only facer material;
- particles comprising rigid foam material and facer material.

Preferably said comminuted particles comprise at least particles comprising only rigid foam material and particles comprising only facer material. If the comminuted particles comprise particles comprising rigid foam material and facer material, said particles can enhance the connection with other of the above-mentioned particles.

The rigid foam material is the material derived from the rigid foam part of the waste. Said rigid foam material is derived by comminuting said waste, such that the rigid foam material can or cannot be foamed, or that the rigid foam material can have a portion that is foamed and a portion that is no longer foamed. For example said waste can be derived from the following waste streams:
- Waste from (parts) of insulation panels from production errors, construction sites (e.g. cutting waste), renovation projects (e.g. old and/or used insulation panels and cutting waste from installing new panels), waste from recycling/waste/container parks. Typically this waste will comprise rigid foam and facers and this in an amount that corresponds to the amount of produced insulation panels. For example said waste will comprise between 60 and 95 weight percentage of rigid foam and between 5 and 40 weight percentage of facers. To be able to further process this waste into said panels of the invention and to transport this waste, this waste is preferably shredded (e.g. comminuted to a certain size) or otherwise comminuted and pressed together, for example in briquettes, such as to reduce the transport volume. Said insulation panels normally comprise a certain amount of insulation gas, such as pentane gas. By pressing said waste together, said gas can be released and even more preferably captured for reuse and/or recycling.
- Waste from production, for example from milling/applying tongue and grooves in insulation panels (e.g. milling dust). Said waste will have a very high amount of rigid foam material and no or almost no facer material. Said milling dust can or cannot be further comminuted and can then be pressed together into for example briquettes.

To form said comminuted particles and to provide panels with the desired properties and to avoid fluctuations, the facers and the rigid foam can be separated from each other and this in one or more particular steps of the process in which the waste is converted into said comminuted particles and/or different waste streams can be mixed. For example the comminuted particles can be separated in two or more streams, being for example a first stream comprising mainly rigid foam material and a second stream comprising mainly facer material. Desired amounts of said two or more streams can then be brought together again to obtain comminuted particles with the desired weight ratio rigid foam material: facer material. One can also choose between different waste streams, for example waste streams from production -e.g. milling-, waste streams from construction sites, waste streams from recycling parks. Also because one can determine said weight ratio, independent of the waste stream, production can be stable and/or one can choose the desired weight ratio, one can produce such panels with different sublayers, said sublayers each comprising said comminuted particles and a said binder material, but having different weight ratios (see further). This invention thus also relates to a method wherein the weight ratio rigid foam material: facer material of the comminuted particles during production is determined, and this for example by separating the comminuted particles into different streams and mixing the desired amounts of said different streams together and/or by mixing different waste streams together.

The panels can have different thicknesses, said thickness being for example determined by the use of said panels. Also the other dimensions are mainly determined by the use.

Said substrates have high dimensional stability and good water resistance. Preferably said substrates have max. 1% swelling after 24h according to EN 317:1993 or DIN 68763, and/or a Dₛ(70,90) ≤ 1% or Dₛ(-20,-) ≤ 1% according to EN 1604:2013.

For example the panels can be used as construction panels, wherein the dimensional stability of said substrate and the water resistance of said substrate is highly appreciated. Said panels can only comprise said substrate, or said substrate can be sandwiched between two layers or finished with one top layer. The thickness of the panel can be for example between 3 mm and 50 mm, for example between 10 mm and 40 mm.

Said panels can also be used as decorative panels, for example as floor panels, wall panels or furniture panels. Said panels than have at least one decorative layer directly or indirectly attached to a first surface of the substrate and optionally a balancing and/or decorative layer directly or indirectly attached to a second surface of the substrate, said second surface being opposite said first surface. For floor panels, the panel thickness is typically between 2 mm and 15 mm, for example between 3 mm and 10 mm, for example approximately 4 mm or 5 mm.

Also the other dimensions of the panel will depend on the desired use. Said substrate can have different average densities. For example for floor panels, said substrate can have an average density of more than 500 kg/m³, preferably more than 700 kg/m³, more preferably at least 900 kg/m³, for example 1000 kg/m³. If light panels are desired, for example if the panels are to be used in vehicles, such as campers, airplanes, etc. one can make use of a substrate having an average density of at most 600 kg/m³, preferably at most 500 kg/m³. The average density can be measured according to EN 323:1993 and/or according to EN 1602:2013.

The binder material is preferably a glue or is a mixture of two or more glues. For example the binder material can be a thermosetting resin and/or a bio-based glue and/or isocyanate based glue.

In addition to said substrate, said panel can have one or more additional layers, as long as not contradictory, which are preferably chosen of the list of: a lacquer layer (which has been for example UV cured and/or heat cured and/or is a polyurethane lacquer layer), a resin impregnated paper, a plastic layer (for example a thermoplastic based layer, being a layer comprising thermoplastic material as a binder material and optionally inorganic/organic fillers and optionally plasticizers wherein the thermoplastic material can or cannot make up at least half of the weight of said layer, with the thermoplastic material being for example PVC-polyvinylchloride-, PP-polypropylene-, PE - polyethylene-, PET -polyethylene terephthalate), a resin layer, a coating layer, a veneer layer, a timber layer with a thickness of more than 2,5 mm, a glue layer, a print obtained by direct printing upon the substrate, an oil layer, a metal layer, a scrim or a net (e.g. a glass fiber scrim). Said one or more additional layers can form a said decorative layer. Preferably the weight ratio of the foam material to the sum of the foam material and the facer material is at least 75 percentage and preferably is located between 85 percentage and 98 percentage. For example the weight ratio is between 86 and 88 percentage, is for example approximately 87 percentage or 90 percentage or 93 percentage or 95 percentage. It has been found that with these weight ratio's excellent substrate properties are obtained and said substrate can also be made in an efficient manner.

Preferably the facer material comprises paper and/or metal, wherein preferably the facer material comprises at least paper. For example, at least 30 weight percentage of said facer material is paper, such as kraft paper, preferably at least 50 weight percentage of said facer material is paper. Paper has a stabilizing effect in the panel as such and/or during production. Said paper can take up moisture during production and as such contribute to a good production. Paper also enhances the tensile strength of the obtained panel. Also metal is desired. Preferably said facer material comprises at least 10 weight percentage of metal, more preferably at least 20 weight percentage. Said metal enhances the heat conductivity. This can be especially desirable during production when the substrate is made by heat pressing. Metal will also make the panel more suitable for screwing into. Of course the amount of paper and/or metal will also be determined by the desired panel. If heat conductivity is needed, more metal is desirable, if no heat conductivity is needed, less metal is desirable. The amount of metal and/or paper used can be arranged/determined during production, for example the comminuted particles can be divided in separate streams, for example a stream comprising mainly metal facer material and a stream comprising mainly paper facer material and/or use can be made of different waste streams. Further this contributes to uniform and good production. The facer material could be used as such, thus without prior separation of the different kinds of facer material, such that an additional production step is avoided. The weight ratio of metal material upon paper material is preferably between 0,3 and 0,6. The facer material could also comprise plastic material, such as thermoplastic material -for example polyethylene-, and/or glass fiber material. If plastic material is present, preferably at least 10 weight percentage of said facer material is plastic material, preferably at least 15%. For example, if the facer material comprises metal, such as aluminum, and paper, such as kraft paper, and plastics, such as polyethylene, the facer material comprises between 15 and 35 weight percentage metal, between 45 and 75 weight percentage paper and between 10 and 30 weight percentage plastics.

Said layer-shaped substrate is preferably made by pressing, more particularly heat pressing. This can be continuous, for example use can be made of a double belt pressing device, or this can be discontinuous, for example use can be made of a single daylight press or a multi daylight press. This means that similar pressing devices can be used as for making particle boards and/or wood fiber boards. Said layer-shaped substrate can also be made by extrusion or (injection) molding. If the layer-shaped substrate comprises two or more sublayers, co-extrusion can be used.

In a very preferred embodiment the binding material comprises, and preferably is, a glue. Said glue is preferably chosen from the list of: an isocyanate based glue, for example a poly methylene diphenyl diisocyanate (pMDI) glue, a polyurethane based glue, an epoxy based glue, an ureaformaldehyde based glue, a bio-based glue. When use is being made of isocyanate based glues and/or polyurethane based glues, said glue is compatible with the rigid foam material. Further because of the compatibility, this substrate as such qualifies for simple recycling, such that with these panels, circularity can be improved. For example said substrates can be recycled be comminuting these substrates, as such forming comminuted particles comprising rigid foam material, facer material and glue material, wherein said comminuted particles could be used as raw material to make new panels according to the invention. The last mentioned comminuted particles can also be seen as comminuted particles from waste comprising rigid foam according to the invention, since they are originally also from said waste comprising rigid foam, but with an intermediate step. One can also make use of an aminoplast polymer, produced by a polycondensation reaction from urea and formaldehyde to a urea formaldehyde resin (UF resin). Optionally melamine is added and a melamine urea formaldehyde resin (MUF resin) is obtained, or melamine and/or phenol are added (for example MUPF resins: melamine urea phenol formaldehyde). The glue can also be a bio-based glue, for example a glue based upon sugar, lignin, flour, proteins (e.g. plant/animal/gluten), and/or polyamines and/or polyamides. The glue can be an isocyanate based glue which comprises bio-based material. For example the glue can comprise isocyanates, such as pMDI, and flour and/or polyamides, such as hyperbranched polylysine.

More preferably the layer-shaped substrate has a weight ratio glue to base particles or glue to comminuted particles, situated between 0,03 and 0,20, preferably between 0,05 and 0,15. Said ratio is preferably determined during production, meaning that between 3 and 20 grams of glue, preferably between 5 and 15 gram of glue is added per 100 grams of base particles or comminuted particles, to form said layer-shaped substrate. Said layer-shaped substrate can also comprise additives, fillers, reinforcement scrims or nets, and other components, in addition to said glue and said comminuted particles. Said additives and/or fillers can or cannot be seen as part of the base particles.

In a specific embodiment the binding material comprises a thermoplastic based material, for example comprises one or more of the following components: polyvinylchloride (PVC), polypropylene (PP), polyethylene terephthalate (PET), polyethylene (PE), polyvinyl butyral (PVB). This thermoplastic based material can or cannot be in addition to the abovementioned glues, for example in addition to the isocyanate glues, polyurethane glues, epoxy glues, ureaformaldehyde glues or bio-based glues. This thermoplastic based material then for example enhances the flexibility and/or diminishes brittleness and/or allows the substrate to be foamed. Typically the weight ratio thermoplastic based material to the sum of thermoplastic based material and glue is then situated between 1% and 70%, preferably between 5% and 20%. Typically the weight ratio thermoplastic based material to comminuted particles is between 15 and 35 percentage. For example the binder material can be a combination of PVB and a melamine formaldehyde resin/melamine ureaformaldehyde resin. Said thermoplastic based material can or cannot comprise plasticizers. The binding material can also only comprise said thermoplastic based material, wherein said comminuted particles then preferably are used as filler material as replacement or in addition to other filler material, such as inorganic fillers such as CaCO₃ or talc or vermiculite and/or organic fillers such as wood fibers. The result is then a more lightweight thermoplastic based panel, for example a lightweight LVT (luxury vinyl tile), or a lightweight SPC (solid plastic composite).

In a preferred embodiment the panel is rectangular shaped with two opposing main surfaces and a first and a second pair of opposite edges connecting said main surfaces wherein, according to a direction from one edge to another edge of the first pair of opposite edges and parallel to the second pair of opposite edges, the average density varies, for example gradually increases from said one edge to a central part of the panel and then gradually decreases again from said central part to said other edge and wherein preferably, the average densities along planes parallel to said direction are substantially constant. Said density variation is preferably the result of the production method used to make said panels. For example the layer-shaped substrate can be manufactured by continuous pressing according to a length direction, wherein the edges, which extend according to said length direction, are less dense than more central parts.

In a very preferred embodiment the base particles comprises one or more additives chosen from the list of:
- a moisture absorbent material, such as a super absorbing material, for example crystals of sodium polyacrylate (SPA);
- a catalysator such as potassium octanoate (KOCT) or potassium acetate, preferably in diethylene glycol;
- a heat conductive material, such as conductive salts, metal particles or conductive minerals;
- electrically conductive additives. Examples of such electrically conductive additives are salts, such as alkali salts, or metal (alloy) particles and/or conductive fibers and/or esters, such as carbonic acid esters;
- formaldehyde scavengers, such as metabisulfite.

These additives are in addition to said comminuted particles.

With the aid of a moisture absorbent material, water that is present in production can be absorbed, such that it has no negative influence on the quality of the panel. For example, if pressing is used to obtain the layer-shaped substrate, water can be present by:
- adding water or steam during pressing. This can be beneficial to enhance the heat conductivity, such that shorter pressing times can be used and/or heat is more accurately distributed such that a more uniform quality is obtained.
- water can be present because the glue is a water-based glue and/or water is generated during curing of the glue. The latter is for example the case if the glue is a melamine formaldehyde glue or an ureaformaldehyde glue.
- the comminuted particles or other components can comprise moisture.

The term "superabsorbent materials" preferably refers to water-swellable, water-insoluble organic or inorganic materials including superabsorbent polymers and superabsorbent polymer compositions capable, under the most favorable conditions, of absorbing at least about 10 times their weight, or at least about 15 times their weight, or at least about 25 times their weight in an aqueous solution containing 0.9 weight percent sodium chloride.

Catalysators are beneficial since they can speed up production. For example if pressing is used to obtain the layer-shaped substrate, catalysators can be used to speed up production and/or aid production. For example at the height of the edges of a continuous press or at the height of the edges of a discontinuous press, the material that will form the layer-shaped substrate, e.g. the cake of at least comminuted particles and binder material, can flow beyond the press elements, e.g. beyond the press belts or press plates. By adding catalysators, for example only catalysators at the height of said edges or more catalysators at the height of said edges (e.g. for example no catalysators centrally), said flow can be reduced.

Said catalysts can be chosen such that they will only perform their catalyst function when needed, for example only during the pressing of the layer-shaped substrate. The catalysts can for example be one or more of the following:
- a pressure activatable catalyst;
- an encapsulated catalyst;
- an organic carboxylic acid, preferably heptanoic acid, or potassium bicarbonate or potassium carbonate.

For example to form said layer-shaped substrate the components of said layer-shaped substrate, being at least said comminuted particles, said binder material and here said catalysts, are brought together to form a cake, and said cake is pressed, for example heat pressed. When a catalyst comprising, or essentially consisting of, a pressure activatable catalyst is used, the consolidation of said cake, and for example the curing of the resin when the binder material comprises a resin, can be partially, largely or wholly delayed until pressure is applied at the respective area. So doing, the risk that pressing defects will occur is minimized. When a catalyst comprising, or essentially consisting of, an encapsulated catalyst is used, the shell of the capsule may keep the catalyst from premature activation. For example because the shell somewhat delays the release of the catalyst, originally contained in the core of the capsule, into the cake. The release may for example be delayed until the shell disintegrates due to heat and/or pressure.

The heat conductive material can comprise hyperconductive salts. If heat pressing is used to obtain the layer-shaped substrate, the heat conductive material will ensure that the heat is fast and well distributed as such shortening production time and/or enhancing uniformity.

Other additives are also possible. For example fire retardant additives, antimicrobial additives, antistatic additives, etc.

Said facer material of the comminuted particles can also perform one or more of the above-mentioned functions of the additives. For example if the facer material comprises metal, said metal can enhance heat conductivity. For example if the facer material comprises paper, said paper can absorb moisture. The choice of additives and the amount of additives will therefore also depend on the type and amount of facer material of the comminuted particles. Whit the aid of additives, uniform production can thus be obtained independent of the composition of the used waste streams.

In a specific embodiment the base particles comprise fillers separate from said comminuted particles from waste comprising rigid foam material, said fillers for example comprising inorganic fillers such as CaCO₃ or talc or silica and/or said fillers for example comprising organic fillers, such as wood fibers. Other examples of possible inorganic fillers are chalk, vermiculite and inorganic fibers such as glass fibers. Other example of organic fillers are wood chips and non-wood vegetable fibers such as flax fibers. With the aid of said fillers the physical characteristics of the substrate can be altered as desired. For example, one can add inorganic fillers to increase the average density of the substrate. Said fillers can also be used to improve production. Said fillers can also improve adhesion of said substrate to other layers, such as decorative top layers. For example silica and CaCO₃ at the surface of the substrate will have a beneficial effect upon the adhesion of layers to said surface, such as resin impregnated paper layers, to the substrate. If said fillers are present, the weight of said fillers preferably take up between 1% and 80 % of the total weight of the base particles, preferably between 5% and 50%.

In a specific embodiment, the substrate comprises at least two sublayers, wherein at least one said sublayer and preferably both said at least two sublayers comprise said base particles and a said binder material, wherein the composition of said two sublayers preferably differs in one or more of the following features:
- the amount of facer material and/or the type of facer material;
- the amount of binder material and/or the type of binder material;
- the amount of said comminuted particles and/or the properties of the comminuted particles;
- the thickness;
- the average density;
- the presence and/or amount of other material in addition to said comminuted particles from waste comprising rigid foam and said binder material, such as additives and fillers.

A said sublayer can comprise fillers and/or additives as described above.

The amount of facer material and/or the type of facer material will have influence upon the properties of said sublayer, for example upon the ability to adhere other layers, such as decorative layers, to the sublayer. For example if the panel is a decorative panel comprising a decorative top layer adhered to the substrate, then the substrate can have, from top to bottom, at least a first said sublayer and a second said sublayer, wherein the decorative top layer is directly -for example without an intermediate glue layer- or indirectly -for example with an intermediate glue layer- adhered to the first sublayer, wherein said first sublayer has one or more of the following properties:
- the amount of facer material of the first sublayer is lower than the amount of facer material of the second sublayer;
- the average particle size of the facer material of the first sublayer is smaller than the average particle size of the facer material of the second sublayer;
- the facer material of the first sublayer does not comprise metal and/or paper.
- for the comminuted particles of the first sublayer, the weight ratio of the facer material to the sum of the facer material and the rigid foam material is at most 10%, preferably at most 5%;
- the first sublayer is free from facer material;
- the comminuted particles of the first sublayer are from another waste source than the comminuted particles of the second sublayer, for example the first sublayer can only comprises comminuted particles derived from production;
- the binder material of the first sublayer can comprise thermoplastic based material.

One or more of the abovementioned features enhance the lamination properties and/or the attachment to the first sublayer. For example, facer material could have a negative influence upon the lamination properties. Comminuted particles derived from waste of constructions sites, renovation projects or waste parks, could potentially be polluted with unwanted components. The first sublayer can have a certain amount of thermoplastic material. This can be advantageous if the decorative top layer has a thermoplastic based sheet which has to be laminated upon the first sublayer of the substrate.

One of said sublayers could for example only comprise said binder material or could for example only comprise said base particles.

Before attaching said decorative sublayer to the substrate, said first sublayer could or could not have been sanded. With sanding better adhesion could be obtained.

The decorative top layer could be directly adhered by laminating said decorative top layer to said substrate, and this for example by the DPL technique (direct pressure laminate), or for example by direct printing upon said substrate with the aid of for example inks and optionally addition of other layers, such as primers, coatings, lacquers, etc. The decorative top layer could also be indirectly attached to the substrate, for example with the aid of an additional glue layer. This can be the case when the decorative top layer is a HPL (high pressure laminate). The HPL can then be adhered to the substrate with the aid of a hotmelt glue or a cold seal adhesive. The HPL can be adhered to the substrate with the aid of a polyurethane glue and/or a polyvinyl butyral glue.

The average density of said at least two sublayers can be different. For example one of said sublayers can have a higher average density and this for example because said sublayer has fillers or a higher amount of fillers, such as above mentioned inorganic fillers. This can be useful if for example coupling parts are present in said sublayer. Said higher average density enhances the coupling strength.

The at least two sublayers can be made or cannot be made in the same pressing operation and/or extrusion operation. For example if pressing is used to make the substrate, the substrate can have at least three sublayers, with two outer sublayers and at least one central sublayer. The composition of said central sublayer can differ in one or more of the following ways:
- only the central sublayer comprises catalysts or the central sublayer has a higher amount of catalysts then the outer sublayers;
- only the central sublayer comprises heat conductive material or the central sublayer has a higher amount of heat conductive material then the outer sublayers;
- the average particle size of the comminuted particles of the central sublayer is higher than the average particle size of the comminuted particles of the outer sublayers.

Said features can ensure more uniform pressing and reaction of said sublayers during pressing. By having said three sublayers, uniform pressing is enhanced.

In said sublayers (and also in a one-layered substrate) the composition can be different according to the location. For example the panel can be a pressed substrate or comprise a pressed substrate , which is obtained, for example by sawing or cutting, from a pressed plate-shaped material obtained by pressing a cake made from said base particles and said binder material in a continuous or a discontinuous process, wherein the composition of said cake can be determined by its location, for example at the height of the edges where the cake is pressed, the cake can comprise (more) catalysts and/or (more) heat conductive material and/or different binder material and/or more binder material, such that the cake solidifies quicker at the height of the edges as such reducing the risk of outflow. Instead of making use of a different composition at the height of the edges or in addition to said different composition, other measurements can be taken to prevent outflow. For example one can make use of different material as holding/retaining material and/or one can make use of retaining belts or similar.

In a specific embodiment, wherein a cake comprising said binder material and said base particles is pressed, outflow is prevented by making use of one or both of the below mentioned measures:
- make use of strips of holding material, such as for example strips of rock wool, stone wool, glass wool, wood wool. The strips can for example be beam shaped. If use is made of a discontinuous press, said strips of holding material can be placed around the cake. If use is made of a continuous press wherein a said cake is transported with one or more belts and then pressed, said strips of holding material can be placed/rolled of -when a said strip of holding material is rolled up- upon said belt at the height of the edges. Said strips of holding materials can or cannot be reused.
- make us of foil, more specifically release foil, wherein this foil encapsulates a said cake at least partially. If use is made of discontinue pressing, use can be made of at least two foils that encapsulate said cake approximately completely. For example the cake can have a plate-shape with two opposing main surfaces and two pair of opposite edges, wherein a first foil encapsulates the cake at the height of a said first pair of opposing edges and the opposing main surfaces, and another second foil encapsulates the cake at the height of a said second pair of opposite edges and the opposing main surfaces. If use is made of continuous pressing, use can be made of a foil, wherein said cake is formed upon said foil and said foil is folded around said cake before pressing. For example said cake can be scattered upon a foil, said foil being upon a belt that transports the cake such that the cake can be pressed, wherein after formation of said cake, said foil is folded around said cake. Said foils are preferably vapor-permeable, but this is not necessary. If also use is made of said strips of holding material, said strips of holding material are then preferably located outside said one or more foils.

The above-mentioned specific features to prevent outflow could also be used when making other panels or boards, for example when making particle boards and/or wood fiber boards and/or other boards comprising lignocellulosic material or vegetable material. Said measures are thus also possible for pressing a cake comprising lignocellulosic material and a binder material in a continuous press or a discontinuous press.

The said two sublayers of the substrate are preferably directly attached to each other, and this for example because they are made in the same pressing operation, for example a pressing operation wherein at least two layers are scattered above each other to form a two-layered cake, wherein said cake is pressed. If the latter is the case, the transition between said two sublayers is normally not a clean transition but a gradual one. At the height of said transition a reinforcement layer, such as a scrim or net, for example a glass fiber scrim, can be present. In a specific embodiment the said two sublayers can be indirectly connected to each other, for example by means of an additional glue layer.

In a specific embodiment the panel comprises a decorative top layer attached to said substrate, said decorative top layer preferably comprising one or more of the following:
- one or more resin impregnated papers;
- one or more plastic sheets;
- one or more wood veneers;
- one or more timber layers;
- one or more coatings;
- one or more textured layers;
- one or more lacquers;
- one or more foamed layers;
- one or more print layers.

The decorative top layer can comprise a sublayer that can be described by one or more of the abovementioned terms. For example the sublayer can be resin impregnated printed paper, such that it is also a print layer. Further said sublayer can have a texture and is then also a textured sublayer. Textured sublayers can be obtained in different ways, for example by mechanical embossing and/or chemical embossing and/or digital printing. The resin of the resin impregnated paper can be chosen from the non-exhaustive list of: a thermosetting resin, such as a melamine resin, an acrylate resin, a polyester resin or a phenol resin. The resin can also be a bio-based resin, such as a resin based upon sugar, flour, lignin, proteins (e.g. plant/animal/ gluten) and/or polyamines. Surprisingly it has been found that acrylate resin impregnated papers can be very well attached to a substrate comprising said base particles and a said binder material. More in particular, the acrylate resin comprises a thermo-initiator and/or the acrylate resin is a combination of acrylates and methacrylates. The acrylate resin can comprise urethane acrylate, more preferably an aliphatic urethane acrylate. Preferably, the acrylate resin comprises one or more or combinations of urethane acrylate, methacrylate, epoxy acrylate and polyester acrylate. The acrylate resin can comprise mercapto acrylate and/or silicone acrylate and/or fluorocarbon acrylate.

More preferably, when the panel comprises a said decorative top layer, the decorative top layer, is provided with embossed portions, said embossed portions being present at the height of the decorative top layer and/or continuing up into the said substrate. The latter are so-called deep embossments. Surprisingly it has been found that less pressing defects occur when deep embossments are present, even if the panel is made with the DPL-technique. When deep embossments are present, use can for example be made of melamine resin impregnated papers to form the decorative top layer and this with low risk of pressing defects.

The panel can also have a decorative bottom layer, opposite said decorative top layer. This is for example desirable for furniture panels of which both surfaces are visible. Said decorative bottom layer can have the same features of the decorative top layer and more preferably the decorative top layer and the decorative bottom layer of one panel have a similar build up and/or a similar look and feel.

The panel can or cannot have a balancing layer opposite said decorative top layer.

If the panel is made according to the HPL technique, the decorative top layer is preferably adhered to the substrate with the aid of an additional glue layer, such as a hot melt glue, and the decorative top layer preferably comprises at least three resin impregnated papers, being from bottom to top, at least one resin impregnated paper, for example a resin impregnated kraft paper, a resin impregnated printed paper, said paper being analogously and/or digitally printed, and a resin impregnated translucent/transparent paper. The benefit here is that with three or more paper layers, a very robust decorative top layer is obtained, and also the HPL technique allows to adhere the decorative top layer to the substrate in a uniform manner.

The decorative top layer can comprise a decor directly printed upon the substrate. With direct printing is indicated that printing, for example the appliance of ink with an inkjet printer, is performed directly upon said substrate. With directly printed is indicated that the print is not printed upon a separate sheet, such as printed upon a paper or a plastic sheet, before application upon the substrate. The substrate however, can have undergone a pretreatment as such to improve the printing, e.g. to improve the adherence of the inks. For example a primer can be applied upon the substrate before printing the substrate with an ink. After said printing, typically one or more protective layers are applied upon said decor, for example a coating and/or lacquer. A said protective layer can or cannot be a textured layer. With the aid of a textured layer, the decorative top layer has a structure which can comply with the decor.

Further, in a specific embodiment, the decorative top layer is attached to said substrate by a separate glue layer or a primer layer is present between the substrate and the decorative top layer to enhance attachment. This is beneficial if the decorative top layer and the substrate are not that compatible. By having a said glue layer and/or primer, the compatibility and good adherence can be improved.

For example if the decorative layer comprises one or more acrylate resin impregnated papers, the substrate could be provided with a polyurethane primer before attaching said one or more acrylate resin impregnated papers by for example the DPL technique to the substrate.

In a very preferred embodiment, the said glue layer provides adhesion between said decorative top layer and said substrate, wherein said adhesion is decreasable by a debonding activator such as heat and/or humidity and/or radiation and/or chemicals. When recycling said panels at end-of-life, said substrate and decorative top layer can be separated in an easy manner, as such improving recyclability. For example the glue layer can comprise additives selected from one or a combination of more than one of the list consisting of
- metallic particles;
- non-metallic particles;
- thermally expanding particles, e.g. expandable thermoplastic microspheres encapsulating a gas which can expand and break the microspheres when heat is applied;
- blowing agents;
- hydrolysable agent;
- azodicarbanamide;
- expandable graphite;
- polycarboxylic acids;
- sulphonylhydrazides;
- additives capable of changing from crystalline to amorphous form and/or from amorphous to crystalline form.

In a very preferred embodiment, the panel comprises mechanical coupling parts which allows the panels to be coupled to a similar panel. For example, the panels are rectangular, either square or oblong, and are provided with at least a first pair of opposite edges with coupling parts, which allow two such panels to be coupled to each other, wherein in a coupled position a locking is created in a direction perpendicular to the plane of the coupled panels and/or in a direction in the plane of the panels and perpendicular to the coupled side edges. Preferably said panels are also provided with a second pair of opposite edges with coupling parts, which allow two such panels to be coupled to each other, wherein in a coupled position a locking is created in a direction perpendicular to the plane of the coupled panels and/or in a direction in the plane of the panels and perpendicular to the coupled side edges. The coupling parts can be female and male coupling parts as described in WO 97/47834, WO 2021/070022, WO 2021/105798 or WO 2021/059062. The coupling parts described in these patent publications are incorporated by reference. The coupling parts can be female and male coupling parts as described in WO 2017/115202, WO 2021/111210, WO 2017/068523 or WO 2009/066153. The coupling parts described in these patent publications are incorporated by reference.

According to a first variant of the first aspect of the invention, the comminuted particles comprise rigid foam material derived from the rigid foam. Further the comminuted particles do not or only in a very small amount, comprise facer material derived from the facers such that for the comminuted particles the weight ratio of the rigid foam material to the sum of the rigid foam material and the facer material, is more than 99 percentage. Said comminuted particles do not or almost do not comprise facer material, and could be the result of the waste used to form these comminuted particles. For example the waste could approximately not comprise facers. However this could also be the result of separating the facers of the waste before comminuting the waste and/or separating the facer material from the rigid foam material. All the embodiments described for the first aspect of the invention, not relating to the facer material, also apply to this first variant. In other words, the facer material of the first aspect of the invention and the amounts of facer material, can be an optional feature.

According to a second aspect, the invention relates to a method for manufacturing a panel, said panel comprising at least a layer-shaped substrate, wherein said method comprises:
- a basic step wherein base particles and a binder material are brought together and shaped into a plate-shaped material, said base particles comprising comminuted particles from waste comprising rigid foam, for example from waste of insulation panels comprising rigid polyurethane foam or rigid polyisocyanurate foam, and said binder material preferably comprising a glue, and wherein said shaping into a plate-shaped material preferably comprises pressing;
- optionally a decoration step, wherein at least a decorative layer is applied to said plate-shaped material;

wherein said plate-shaped material forms the layer-shaped substrate of said panel or further processing steps are performed such that the panel comprises a layer-shaped substrate derived from said plate-shaped material;
characterized in that said waste further comprises facers, such that the comminuted particles comprise rigid foam material derived from the rigid foam and facer material derived from the facers, wherein for the comminuted particles the weight ratio of the foam material to the sum of the foam material and the facer material, is at most 99 percentage.

With this method, a panel according to the first aspect of the invention can be made. Therefore all the embodiments and features described for the first aspect of the invention also apply for the second aspect and vice versa.

Preferably the basic step comprises a first step wherein the base particles and a binder material are brought together and formed into a cake. Said cake can be a one-layered cake having a substantially uniform composition or having compositions depending on the location within the cake. The cake can also be multilayered, for example two-layered, and preferably three-layered, wherein each sublayer can have a uniform composition or not and/or wherein the sublayers have different compositions or not. For example if the cake is three-layered with a central sublayer and two outer sublayers, the composition of the outer sublayers can be substantially the same and the composition of the central sublayer can differ from the composition of the outer sublayers. Said basic step then preferably has a shaping step wherein said cake is formed into the plate-shaped material, wherein said shaping step preferably comprises pressing, such that the cake is at least pressed to form said plate-shaped material. This shaping step can take place with the aid of a pressing device, such as a continuous pressing device or a discontinuous pressing device. For example the pressing device can be a double belt press or can be single daylight press. Use of a release agent and/or release foil can be made to avoid sticking to the pressing device. Use of release foil can be made to avoid outflow. Pressing can or cannot include prepressing. If prepressing is used, the edges of the cake can be more prepressed as such to avoid unwanted flow during the further pressing. To form said cake, said comminuted particles can be mixed with said binder material and then strewn upon a transporting belt to transport the cake such that it can be pressed. If pressing is used, preferably use is also made of prepressing.

Said optional decoration step makes use of pressing or not. For example during said decoration step one or more layers can be attached to said substrate by pressing. When said decoration step is performed, said panel comprises a decorative top layer which is derived from said decorative layer or which is this decorative layer.

During the basic step, use can be made of extruder to shape said plate-shaped material, wherein preferably use is made of a die and one or more calendaring rolls. To make use of extrusion to shape said-plate-shaped material, said binder material preferably comprises thermoplastic material, for example thermoplastic material chosen from the list of: polyvinylchloride (PVC), polypropylene (PP), polyethylene terephthalate (PET), polyethylene (PE), polyvinyl butyral (PVB). This thermoplastic based material can be in addition to a glue if the binder material also comprises a glue, for example in addition to an isocyanate glue, a polyurethane glue, an epoxy glue, an ureaformaldehyde glue or a bio-based glue. The binder material can also only comprise this thermoplastic based material. If said thermoplastic material is used, use can also be made of pressing in addition to or instead of extrusion. The thermoplastic based material enhances the flexibility and/or diminishes brittleness and/or makes extrusion possible.

With said plate-shaped material is preferably indicated a basic plate. For example the shaping into the plate-shaped material can make use of continuous pressing device which comprises a double belt press which presses and consolidates said cake, and which further comprises a saw which saws said pressed and consolidated cake into basic plates. Said basic plates can form the panels or these basic plates can be further processed, for example sanded and/or provided with coupling means and/or cut to size to form the panels. A decorative layer can also be applied to this basic plate, wherein the basic plate with the decorative layer then forms the panel or is further processed, for example cut to size and/or provided with coupling means to form said panels.

In a preferred embodiment, shaping into said plate-shaped material, comprises at least pressing, more preferably at least pressing with heat, wherein
- moisture is added before and/or during pressing; and/or
- current is added during pressing; and/or
- during the pressing, the temperature builds up to a maximum pressing temperature, and preferably decreases again.

With pressing with heat is indicated that pressing takes place at elevated temperatures, for example temperatures of more than 50°C, preferably more than 100°C, more preferably more than 150°C, for example approximately 200°C. Pressing with heat can be done be actively adding heat and/or heat can be the result of the pressing action and/or heat can be the result of the used binder material, e.g. the binder material can comprise an exotherm glue. Preferably use is made of heated press elements, such as heated press plates, heated press belts, etc. Pressing with heat can be done with press elements with a constant and uniform temperature or with a varying temperature. For example, if use is made of a continuous double belt press with pressing belts, the temperature in the beginning and/or more centrally can be higher than at the end of the belts. At the end of the belts, no heat can be added or even active cooling can be present, for example by extracting heat at the end of the belt, such that the pressed and consolidated cake is already cooled. This can result in less deformation, such as warping. If heat is extracted, this heat can be reused at for example the beginning of the press belts. If use is made of a single daylight press, during one pressing cycle the temperature can be as follows: the temperature during pressing can first rise to a maximum, stay a certain time at this maximum, and then decrease again. When the press opens, the result is a plate shaped material which already has cooled down again, resulting in less deformation such as warping.

Pressing can be done with a pressure of between 15 and 50 kg/m³, depending on the desired density. Pressing can take place between 5 and 25 seconds per mm.

In a preferred embodiment said brought together base particles and binder material form a cake, for example a cake as mentioned above, wherein this cake is shaped, for example at least pressed, into said plate-shaped material, and wherein before shaping said cake, the cake has a temperature of more than 30°C, preferably more than 50°C, even more preferably more than 70°C. Said temperatures can be a result of one or more of the following:
- said base particles and/or said binder material can be heated before bringing them together, for example by dry hot air.
- said brought together particles and binder material can be heated, for example by dry hot air, and this for example before forming said cake. The binder material for example comprises a glue and said base particles and glue are brought together and then transported and strewn onto a belt. This can be the case if use is made of a double belt pressing device. Said transport can be done with the aid of hot and dry air, such that during transport the brought together base particles and binder material are heated and have a certain temperature when strewn upon said belt. Additionally or alternatively said belt can be heated.
- use can be made of infrared heating and/or other types of radiant heat, and this for example to heat up the cake and/or the binder material and/or the base particles;
- production can take place in a heated environment.

Because of said elevated temperature of the cake, shaping of said cake can take place in a faster manner and/or with less energy. Also consolidation can occur faster, such that problems during pressing, such as outflow, can be reduced.

In a preferred embodiment the binder material comprises a glue, said glue preferably being chosen from the list of: an isocyanate based glue, for example a poly methylene diphenyl diisocyanate (pMDI) glue, a polyurethane based glue, an epoxy based glue, a formaldehyde based glue, a bio-based glue. The production process will depend on the type of glue used. The glue can be an isocyanate based glue which comprises bio-based material. For example the glue can comprise isocyanates, such as pMDI, and flour and/or polyamides, such as hyperbranched polylysine. With the aid of the abovementioned glue pressing can be used to shape said plate-shaped material.

Further preferably the weight ratio of the glue to the base particles is located between 3 and 20 percentage, more preferably between 5 percentage and 15 percentage.

In a preferred embodiment said weight ratio of the foam material to the sum of the foam material and the facer material is at least 75 percentage and preferably is situated between 85 percentage and 98 percentage. For example said weight ratio is between 85 and 90 percentage. It has been found that shaping, such as pressing, can be very well performed when having these amounts of facer material. This weight ratio relates to the average weight ratio. Of course the facer material does not have to be uniformly distributed when forming the plate-shaped material. For example use can be made of a cake comprising one layer, two layers, three layers or more layers. Also the distribution in a said layer does not have to be constant. For example, if a pressing device is used, higher concentrations of facer material can be present at the edges and/or lower concentrations can be used at the height of the surfaces of the cake which come into to contact with the press elements, e.g. the upper and/or lower surface of the cake, and this to avoid sticking and/or reduce wear of the press elements.

In a specific embodiment the facer material comprises paper and/or metal. Metal can contribute to good heat distribution when heat pressing is used. Paper can help to avoid moisture problems when water based binder materials are used and/or when water is produced during pressing. For example if the binder material comprises a melamine ureaformaldehyde resin, water is produced during curing of said resin when pressing.

In a specific embodiment the base particles comprise fillers separate from the comminuted particles, said fillers for example comprising inorganic fillers such as CaCO₃ or talc or silica or vermiculite or chalk. Other examples of fillers are glass fibers or carbon fibers. The fillers can comprise organic fillers such as wood fibers or wood chips.

In a specific embodiment the binder material comprises a thermoplastic based material, for example comprises one or more of the following components: polyvinylchloride (PVC), polypropylene (PP), polyethylene terephthalate (PET), polyethylene (PE), polyvinyl butyral (PVB). This thermoplastic based material can be in addition to the abovementioned glues, for example in addition to the isocyanate glues, polyurethane glues, epoxy glues, formaldehyde glues or bio-based glues. This thermoplastic based material then for example enhances the flexibility and/or diminishes brittleness. This allows for many shaping processes, such as pressing and/or extrusion and/or sawing and/or sanding. For example the binder material can be a combination of PVB and a formaldehyde resin. Said thermoplastic based material can or cannot comprise plasticizers. The binding material can also only comprise said thermoplastic based material, wherein said comminuted particles then preferably are used as filler material as replacement or in addition to other filler material, such as inorganic fillers such as CaCO₃ or talc and/or organic fillers such as wood fibers. The result is then a more lightweight thermoplastic based panel that can be extruded and/or foamed, for example a lightweight LVT (luxury vinyl tile), or a lightweight SPC (solid plastic composite). Foaming can be mechanically and/or chemically, for example with the aid of foam initiators.

In a preferred embodiment the base particles comprise additives, said additives preferably being one or more additives chosen from the list of:
- a heat conductive material;
- a catalysator;
- a moisture absorbing material;
- an electrically conductive material;
- formaldehyde scavengers, such as metabisulfite.

With the aid of additives the properties of the produced panel can be enhanced and/or the production process can be enhanced, for example can be accelerated, can reduce the energy input, can reduce the emission of harmful components, etc.

For example heat conductive material, such as metal components or hyperconductive salts, can enhance the production process by uniformly and fast distribution of heat during pressing.

Catalysators can speed up the production process and/or reduce the amount of binder material needed. Moisture absorbing material can take up harmful moisture of the raw material, e.g. the other base particles and the binder material and/or take up moisture produced during processing.

In a specific embodiment the substrate is a one-layered substrate comprising said binder material and said base particles. The distribution of said base particles and binder material can be uniformly or not, e.g. depend on the position in the panel.

In another specific embodiment the substrate comprises at least two sublayers, wherein each sublayer comprises said binder material and said base particles, wherein the composition of said two sublayers preferably differs in one or more of the following features:
- the amount of facer material;
- the amount of binder material;
- the type of binder material;
- the amount of comminuted particles;
- the type of comminuted particles;
- the thickness;
- the average density;
- the presence and/or amount of additives and fillers.

It is possible that the sublayers have the same composition, however by having different compositions, the different sublayers can be given the required properties and this according to their position. When pressing is used for shaping, said substrate is preferably at least three-layered. For example the substrate can have two outer sublayers between which one central sublayer, or more central sublayers extend. By having said at least three sublayers, warping can be prevented because the outer sublayers can perform opposite forces in the same order of magnitude. The outer sublayers, more in particular the outer sublayer upon which a decorative top layer will be attached, typically can have less facer material and/or can have base particles with a smaller average particle size and/or can comprises thermoplastic material or can comprise more thermoplastic material, etc. One of said sublayers could for example only comprise said binder material or could for example only comprise said base particles.

Preferably said sublayers are formed by strewing, e.g. by strewing a first layer of brought together binder material and base particles, and by subsequently strewing one or more other layers of brought together binder material and base particles, as such forming a cake with two or more sublayers and then pressing together said cake. This implies that between the different sublayers there is no sharp dividing line. For example, the one or more central sublayers can clearly have comminuted particles with bigger average particles sizes then the outer sublayers, however no sharp transition between said sublayers is visible. Another possibility is to form each sublayer separately and then gluing together said sublayers.

Hybrid substrates are also possible, with hybrid substrates indicating two or multilayered substrates having two or more sublayers, wherein at least one sublayer does not comprise said base particles, but for example comprises wood fibers or wood chips or is thermoplastic based layer, e.g. a PVC or other thermoplastic layer with optionally fillers and/or plasticizers, said fillers not comprising said comminuted particles.

The panel can only comprise said layer-shaped substrate, with said layer-shaped substrate comprising one, two, three or more sublayers and wherein preferably each sublayer comprises said binder material and said base particles. This is for example the case when the panel is used for construction purposes. Such panel has excellent waterproof properties and dimensional stability. Said panel can for example be a rectangular shaped panel, square or oblong, with two pair of opposites edges. At least one pair of opposite edges can be provided with coupling parts, for example with coupling parts which provide for vertical coupling perpendicular to said coupled panels and/or horizontal coupling parallel to said coupled panels. For this the coupling parts can comprise a tongue and groove, can form a dovetail coupling, a fingerjoint coupling, etc. Said panel can or cannot have sanded surfaces. Such a panel can for example be made in a continuous process, for example with the aid of a double belt press, which presses a cake comprising brought together binder material and base particles together, to form a plate-shaped intermediate product that is then sawn into plate-shaped material. This plate-shaped material can form the panel as such, or one or more further production steps, such as cutting to size, providing coupling part (for example by milling and/or cutting and/or sawing), sanding, etc. can also be performed.

In a specific embodiment the method comprises said decoration step, wherein at least said decorative layer is applied to said plate-shaped material, wherein said decorative layer preferably comprising one or more of the following:
- one or more resin impregnated papers;
- one or more plastic sheets;
- one or more wood veneers;
- one or more timber layers;
- one or more coatings;
- one or more textured layers;
- one or more lacquers;
- one or more print layers;
- one or more foamed layers;
- one or more metal layers, for example metal foils and/or metal coatings;
- one or more reinforcement layers, for example (glass fiber) scrims or nets.

With this embodiment a decorative panel can be formed comprising a substrate, preferably derived from said plate-shaped material or being said plate-shaped material and a decorative top layer, preferably derived from said decorative layer or being said decorative layer.

For example the decorative layer can comprise one or more resin impregnated papers. For example the decorative layer can comprise at least a resin impregnated printed paper -a so-called decor paper-, and one resin impregnated translucent/transparent paper -a so-called wear layer-. Such a wear layer could comprise wear resistant particles such as aluminum oxide particles or corundum. Typically such decorative layer is attached to the plate-shaped material by the DPL technique wherein the plate-shaped material and the decor layer and the wear layer are placed on top of each other, with the decor layer located between the plate-shaped material and the wear layer and then pressed together as such to connect them to each other.

For example the decorative layer can comprise at least three resin impregnated papers, for example at least one resin impregnated kraft paper, a resin impregnated printed paper -a so-called decor paper-, and one resin impregnated translucent/transparent paper -a so-called wear layer-, wherein the different papers are attached to each other by pressing and form a HPL (high pressure laminate) before attaching them to the plate-shaped material. Typically said HPL is attached to the plate-shaped material with a glue layer, for example a hotmelt glue or a cold sticking glue. For example use can be made of a polyurethane glue.

Alternatively, to make the decorative layer, said papers do not have to be impregnated with resin before attaching said papers to the plate-shaped material, said resin can also be placed between a said paper and the plate-shaped material or between papers and/or use can be made of vacuum impregnation.

The resin can be melamine resin or an acrylate resin or a polyester resin. Printing of the paper can be done digitally and/or analogously. A benefit of working with said resin impregnated papers, is that beautiful decors can be printed and that embossment in register is possible and panels with good looking bevels, such as pressed bevels, can be obtained.

Before attaching the decorative layer to the plate-shaped material, said plate-shaped material can be treated with a primer, for example a polyurethane primer to enhance attachment of the decorative layer. This can be useful when the decorative layer comprises acrylate impregnated papers. Further said decorative layer can comprise a coating/lacquer on top of said acrylate impregnated papers. The plate-shaped material can also be sanded.

The decorative sheet can have one or more plastic sheets, for example thermoplastic based sheets optionally comprising plasticizers and/or fillers. Said one or more plastic sheets can comprise printed plastic sheets and/or foamed plastic sheets and/or plastic sheets for softness and/or plastic sheets for wear resistance. Typically, if the decorative layer comprises one or more plastic sheets, the outer layer of the decorative layer can comprise a lacquer/coating, such as an UV lacquer/coating. Said plastic sheets can be laminated upon said plate-shaped material and this with or without an additional glue layer between said plate-shaped material and said decorative layer.

The decorative wood layer can comprise one or more wood veneers, which are preferably attached to said plate-shaped material by an additional glue layer, such as a hotmelt glue, a cold attachable glue or a thermosetting glue. Said glue layer can for example be or comprise a resin impregnated sheet, such as a resin impregnated paper. Instead of veneer, use can be made of ticker wooden layers, timber layers of for example more than 2,5 mm thickness.

The decorative layer can comprise one or more coatings and/or lacquers, that can for example provide resistance against one or more of the following: scratch, light, water, etc. Said panels, because of said waterproof and dimensionally stable substrate, can be used outdoor, for example for outdoor furniture or construction.

The decorative layer can have one or more textured layers, and this can be obtained by chemical embossing and/or mechanical embossing and/or printing.

The decorative layer can comprise a decor, such as a wood decor or a stone decor or an artificial decor or a more or less uniform color. This can be provided with the aid of a digitally and/or analogously printed sheet, such as a printed paper or a printed plastic sheet. When the decorative layer only has a certain color, use can be made of a colored paper, such that no additional print is needed.

Instead of using a printed sheet, a decor can also be obtained by direct printing, for example direct printing upon the plate-shaped material. Said plate-shaped material can have undergone a treatment before said direct printing, for example can be treated with a primer, such that good adherence and nice prints can be obtained. If direct printing is used, typically one or more coating layers and/or lacquer layers are applied above said print to protect said print. Said last mentioned layers can be textured.

Said decorative panels can be floor panels, wall panels, furniture panels, etc.

In a very preferred embodiment the said comminuted particles from waste of rigid foam, are derived from briquettes made from comminuted rigid foam waste, for example from waste of insulation panels comprising rigid polyurethane foam or rigid polyisocyanurate foam. With briquettes are indicated pressed together comminuted waste in the shape of for example beams. There are several benefits to such briquettes. This allows the comminuted waste to be transported in a compact manner and to be stored in a compact manner. Also if the waste comprises insulation panels, such as rigid polyurethane foam insulation panels or rigid polyisocyanurate foam insulation panels, said panels often comprise an additional gas for insulation, for example pentane. Said gas is not needed to form the panels and by forming said briquettes said gas is removed, and can even be captured for potential reuse. Also the use of briquettes allows for easy storage of comminuted waste from different sources. For example when making these panels, waste can be derived from many sources. For example use can be made of waste from production, installation, end-of-life products, waste recycling parks, etc. For example in production there can be different kinds of waste sources, for example milling dust from creating coupling parts in insulation panels, or waste from wrong production. End-of-life products and products found in waste recycling parks can be more polluted with unwanted elements. With the aid of said briquettes, one can have briquettes derived from milling dust, briquettes derived from other waste, briquettes from end-of-life products, etc. When making the panel one can choose the desired waste source. For example, if the substrate comprises two or more sublayers, said sublayers comprising said comminuted particles and said binder material, then one could choose the type of briquettes depending on the sublayer. For the outer sublayers one could for example use (more) briquettes from milling dust, since these briquettes comprise less facer material. For central sublayers one could for example use (more) briquettes from end-of-life insulation panels and/or waste container yards, such briquettes could comprise more unwanted components such as glass, plastics, however since these unwanted components are in the central sublayer, they will not negatively influence the properties of the panel. Of course, before, during, or after comminuting said waste, unwanted components due to pollution of said waste, such as glass, plastics, etc. can be separated from the desired components, being the rigid foam material and the facer material, and this at least as much as possible, such that the amount of unwanted components is low. Said briquettes already comprise comminuted waste, preferably however, this comminuted waste is further comminuted to form said comminuted particles to make said panels and even more preferably said comminuted particles and/or said comminuted waste are divided according to their composition, e.g. the rigid foam material is separated from the facer material, and even more preferably the facer material is further separated if it comprises two or more components such as metal and paper, such that the substrates of the formed panels can be made uniformly and/or having the desired weight ratio of rigid foam material to sum of rigid foam material and facer material.

Said waste can also comprise panels having a substrate comprising comminuted particles derived from rigid foam waste and a binder material. This implies that the panels of the invention itself can be recycled and reused to make new panels according to the invention.

The comminuted particles comprise rigid foam material derived from the rigid foam and facer material derived from the facers. The average particle size of these comminuted particles can or cannot be the same. For example the average particle size of the comminuted particles can differ dependent on its position in the panel and/or the average particle size of the comminuted particles substantially derived from the facers, e.g. the facer material, can differ from the particle size of the comminuted particles substantially derived from the rigid foam, e.g. the rigid foam material. For example the average particle size D90 values of the rigid foam material may be smaller than 2mm, or even smaller than 1 mm - this is preferred when being used for outer sublayers and the average particle size D90 values of the facer material may be between 1mm and 6 mm. The average particle size may be measured by various techniques known in the art. Particularly for larger granules, the particle size may possibly be determined by sieving techniques, for example as described in EN 933-2:2020. The particle size of smaller particles may be determined by laser granulometry, in particular, the median particle size D90 may be determined using laser granulometry, which may be performed in accordance with ISO 13320:2020.

According to a first variant of the second aspect of the invention, the comminuted particles comprise rigid foam material derived from the rigid foam. Further the comminuted particles do not or only in a very small amount, comprise facer material derived from the facers such that for the comminuted particles the weight ratio of the rigid foam material to the sum of the rigid foam material and the facer material, is more than 99 percentage. Said comminuted particles which do not or almost do not comprise facer material, could be the result of the waste used to form these comminuted particles. For example the waste could approximately not comprise facers. However this could also be the result of separating the facers of the waste before comminuting the waste and/or separating the facer material from the rigid foam material. All the embodiments described for the second aspect of the invention, not relating to the facer material or relating to the amount of facer material, also apply to this first variant. In other words, the facer material of the second aspect of the invention can be an optional feature.

With the intention of better showing the characteristics of the invention, herein below, as an example without any limitative character, some embodiments are described, with reference to the following figures:
- ***figure 1*** is a perspective view of a first embodiment of a panel according to the invention;
- ***figure* 2** is a perspective view of a second embodiment of a panel according to the invention;
- ***figure 3*** is a perspective view of a third embodiment of a panel according to the invention;
- ***figure 4*** is a first possibility of a cross section of figure 3 shown by the line IV-IV;
- ***figure 5*** is a second possibility of a cross section of figure 3 shown by the line IV-IV;
- ***figure 6*** is a third possibility of a cross section of figure 3 shown by the line IV-IV.

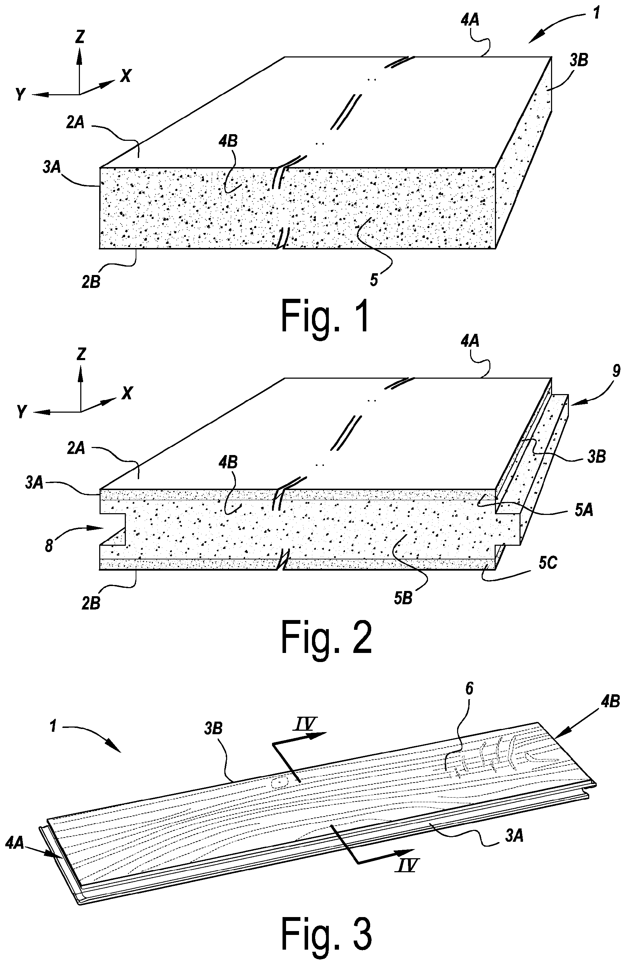

The invention relates to a panel 1 comprising at least a layer-shaped substrate 5. In the embodiments shown in figure 1 and 2, said panel 1 only comprises said layer-shaped substrate 5 and in the embodiment shown in figures 3 to 6, also other layers are present.

Said substrate 5 comprises base particles and a binding material which bonds said base particles together. Said base particles comprise comminuted particles from waste comprising rigid foam, for example waste from insulation panels comprising rigid polyurethane foam or rigid polyisocyanurate foam. Further said waste comprises facers, such that the comminuted particles comprise rigid foam material derived from the rigid foam and facer material derived from the facers, wherein for the comminuted particles the weight ratio of the rigid foam material to the sum of the rigid foam material and the facer material, is preferably located between 85 percentage and 98 percentage.

Said facer material comprises paper, such as kraft paper, and/or metal, such as aluminum foil.

Further said base particles preferably also comprise one or more additives chosen from the list of:
- a moisture absorbent material, such as a super absorbing material, for example crystals of sodium polyacrylate (SPA);
- a catalysator such as potassium octanoate (KOCT) or potassium acetate;
- a heat conductive material, such as conductive salts, metal particles or conductive minerals.

Optionally the base particles comprise fillers separate from said comminuted particles from waste comprising rigid foam material, said fillers for example comprising inorganic fillers such as CaCO₃ or talc or silica and/or said fillers for example comprising organic fillers, such as wood fibers.

The binder material comprises a glue preferably chosen from the list of: an isocyanate based glue, for example a poly methylene diphenyl diisocyanate (pMDI) glue, a polyurethane glue, an epoxy glue, an ureaformaldehyde glue, a bio-based glue. Optionally said binder material can also comprise thermoplastic based material, such as PVC or PVB, and this to enhance the flexibly of the substrate 5.

The glue/base particles weight ratio is preferably situated between 0,05 and 0,15.

As can be seen in figure 1, the panel 1 only comprises said layer-shaped substrate 5 and said substrate 5 is single-layered. Said panel 1 is rectangular shaped with two opposing main surfaces 2A, 2B and a first and a second pair of opposite edges 3A, 3B, 4A, 4B connecting said main surfaces 2A, 2B. Said edges 3A, 3B, 4A, 4B are straight edges, such that the panel 1 has a basic plate shape. Such panels 1 are typically used for construction purposes. The main surfaces 2A, 2B can or cannot be sanded.

The panel 1 shown in figure 2 is similar to, but a bit more advanced than, the panel 1 shown in figure 1, in that at least a first pair of opposite edges 3A, 3B are provided with coupling parts, namely with a traditional tongue 9 and groove 8, which provide connection in a direction perpendicular to said main surfaces 2A, 2B. Another difference with the panel 1 shown in figure is that the substrate 5 has three sublayers 5A, 5B, 5C namely, from top to bottom, an upper outer sublayer 5A, a central sublayer 5B and a bottom outer sublayer 5C. As can be seen in figure 2 the composition of the central sublayer 5B differs from the composition of the outer sublayers 5A, 5C. All the sublayers 5A, 5B, 5C comprise said base particles and said binder material but one or more of the following differences are present:
- the average particle size of the comminuted particles is bigger in the central sublayer 5B than in the outer sublayers 5A, 5C;
- the weight ratio of the rigid foam material to the sum of the rigid foam material and the facer material is bigger in the outer sublayers 5A, 5C than in the central layer 5B. It is possible that the outer sublayers 5A, 5C do not comprise facer material.
- The base particles of the central sublayer 5B comprise more additives than the base particles of the outer sublayers 5A, 5C;
- The binder material of the central sublayer 5B comprises more thermoplastic based material than the binder material of the outer sublayers 5A, 5C.

As can be seen in figure 2, the said tongue 9 and groove 8 are situated in the central sublayer 5B.

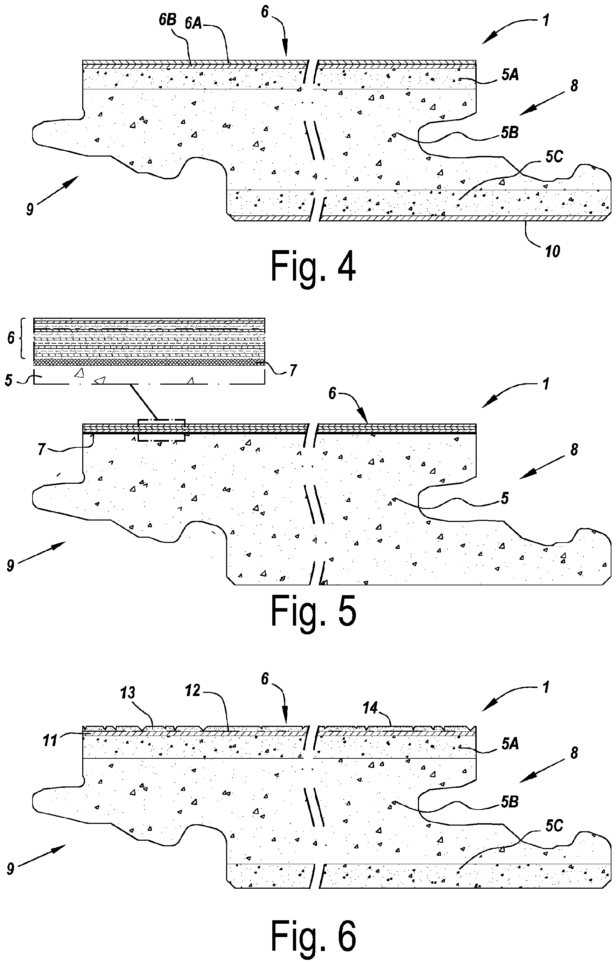

In the embodiment shown in figure 3, the panel 1 not only comprise said layer-shaped substrate 5, but further comprises at least a decorative top layer 6. The layer-shaped substrate 5 can be a one-layered substrate 5 as shown in figure 1, but can also comprise two or more sublayers, for example as shown in figure 2. The panel 1 shown in figure 3 is for example a floor panel 1. Said floor panel 1 is rectangular shaped, here oblong but could also be square, with two opposing main surfaces 2A, 2B and a first and a second pair of opposite edges 3A, 3B, 4A, 4B connecting said main surfaces 2A, 2B. Said edges 3A, 3b, 4A, 4B comprise mechanical coupling parts, which allows the panels 1 to be coupled to a similar panel 1. Preferably, in a coupled position a locking is created in a direction perpendicular to the plane of the coupled panels 1 and in a direction in the plane of the panels 1 and perpendicular to the coupled side edges. The upper main surface 2A is formed by the decorative top layer 6, the bottom main surface 2B can be formed by a balancing layer 10 but can also be formed by the bottom of the substrate 5. The panel 1 shown in figure 3 can be built up according to different possibilities. Figures 4 to 6 show 3 possibilities, of course non exhaustive.

As can be seen in figure 4, the panel 1 comprises from top to bottom:
- a decorative top layer 6, said decorative top layer 6 comprising a wear layer 6A, for example a resin impregnated transparent/translucent paper or a (UV) lacquer, and a decor layer, for example a resin impregnated (digitally) printed paper;
- a three-layered substrate 5, comprising an upper outer sublayer 5A, a central sublayer 5B and a bottom outer sublayer 5C;
- a balancing layer 10, for example a resin impregnated kraft paper.

Such a panel 1 can be made with the DPL technique. Said substrate 5 can be sanded substrate to better attach the decorative top layer 6 to the substrate 5. A polyurethane primer can be applied upon the upper outer sublayer 5A. This is beneficial if a said resin is an acrylate resin.

Further the first pair of opposite edges 3A, 3B comprises a groove 8 and tongue 9 for horizontal and vertical locking.

As can be seen in figure 5, the panel 1 comprises from top to bottom:
- a decorative top layer 6, said decorative top layer 6 comprising a wear layer, for example a resin impregnated transparent/translucent paper, and a decor layer, for example a resin impregnated (digitally) printed paper, and one or more support layers, for example resin impregnated kraft papers;
- a glue layer 7
- a one-layered substrate 5;

Such a panel 1 can be made with the HPL technique. Said substrate 5 can be sanded substrate to better attach the decorative top layer 6 to the substrate 5

Further the first pair of opposite edges 3A, 3B comprises a groove 8 and tongue 9.

As can be seen in figure 6, the panel 1 comprises from top to bottom:
- a decorative top layer 6, said decorative top layer 6 comprising a top coating 14, a textured lacquer 13, with said top coating 14 only being present at the highest points of the upper surface of said textured lacquer 13, a digital print 12 and a primer layer 11.
- a three-layered substrate 5, comprising an upper outer sublayer 5A, a central sublayer 5B and a bottom outer sublayer 5C.

Said primer layer 11 ensures that digital printing upon the substrate 5 can be performed in a good manner. Said textured lacquer 13 can be obtained by chemical and/or mechanically embossing. Said textured lacquer 13 is for example an (UV) cured lacquer, wherein said curing is done locally, such that none cured material can be removed to form said texture. Said substrate 5 can be sanded substrate to better attach the decorative top layer 6 to the substrate 5

Further the first pair of opposite edges 3A, 3B comprises a groove 8 and tongue 9.

Preferably said substrate 5 is obtained through pressing, for example continuous pressing with the aid of a double belt press. Firstly base particles and a binder material are brought together, for example to form a cake, and shaped into a plate-shaped material by preferably pressing. If said panel 1 comprises a decorative top layer, a decorative layer is applied to said plate-shaped material. Said layer-shaped substrate 5 is derived from said plate-shaped material and said decorative top layer 6 is derived from said decorative layer. If said substrate 5 comprises two or more sublayers, this can be obtained by scattering different layers above each other to form a multi-layered cake, wherein said cake is then pressed, to form a multi-layered plate-shaped material.

The invention further relates to various embodiments as presented in the numbered paragraphs hereunder.
1. A panel, wherein said panel 1 comprises at least a layer-shaped substrate 5, said substrate 5 comprising base particles and a binding material which bonds said base particles together, wherein said base particles comprise comminuted particles from waste comprising rigid foam, for example waste from insulation panels comprising rigid polyurethane foam or rigid polyisocyanurate foam, wherein said waste further comprises facers, such that the comminuted particles comprise rigid foam material derived from the rigid foam and facer material derived from the facers, wherein for the comminuted particles the weight ratio of the rigid foam material to the sum of the rigid foam material and the facer material, is at most 99 percentage.
2. The panel according to paragraph 1, wherein said weight ratio of the foam material to the sum of the foam material and the facer material is at least 75 percentage and preferably is located between 85 percentage and 98 percentage.
3. The panel according to paragraph 1 or 2, wherein the facer material comprises paper and/or metal, wherein preferably the facer material comprises at least paper.
4. The panel according to any of the preceding paragraphs, wherein the binding material comprises a glue, preferably chosen from the list of: an isocyanate based glue, for example a poly methylene diphenyl diisocyanate (pMDI) glue, a polyurethane based glue, an epoxy based glue, an ureaformaldehyde based glue, a bio-based glue.
5. The panel according to paragraph 4, wherein the layer-shaped substrate 5 has a weight ratio glue upon base particles, situated between 0,03 and 0,20, preferably between 0,05 and 0,15.
6. The panel according to any of the preceding paragraphs, wherein the binding material comprises a thermoplastic based material.
7. The panel according to any of the preceding paragraphs, wherein the panel 1 is rectangular shaped with two opposing main surfaces 2A, 2B and a first and a second pair of opposite edges 3A, 3B, 4A, 4B connecting said main surfaces 2A, 2B wherein, according to a direction from one edge 3A to another edge 3B of the first pair of opposite edges 3A, 3B and parallel to the second pair of opposite edges 4A, 4B, the average density of the substrate 5 varies, for example gradually increases from said one edge 3A to a central part of the panel 1 and then gradually decreases again from said central part to said other edge 3b and wherein preferably, the average densities along planes parallel to said direction are substantially constant.
8. The panel according to any of the preceding paragraphs, wherein the base particles comprises one or more additives chosen from the list of:
   - a moisture absorbent material, such as a super absorbing material, for example crystals of sodium polyacrylate (SPA);
   - a catalysator such as potassium octanoate (KOCT) or potassium acetate;
   - a heat conductive material, such as conductive salts.
9. The panel according to any of the preceding paragraphs, wherein the base particles comprise fillers separate from said comminuted particles from waste comprising rigid foam material, said fillers for example comprising inorganic fillers such as CaCO₃ or talc or silica and/or said fillers for example comprising organic fillers, such as wood fibers.
10. The panel according to any of the preceding paragraphs, wherein the layer-shaped substrate 5 comprises at least two sublayers 5A, 5B, 5C, wherein at least one said sublayer and preferably both said at least two sublayers 5A, 5B, 5C comprise said base particles and a said binder material, wherein the composition of said two sublayers 5A, 5B, 5C preferably differs in one or more of the following features:
   - the amount of facer material and/or the type of facer material;
   - the amount of binder material and/or the type of binder material;
   - the amount of said comminuted particles and/or the properties of the comminuted particles;
   - the thickness;
   - the average density;
   - the presence and/or amount of other material than the comminuted particles and the binder material, such as additives and fillers.
11. The panel according to any of the preceding paragraphs, wherein the panel 1 comprises a decorative top layer 6 attached to said substrate 5, said decorative top layer 6 preferably comprising one or more of the following:
   - one or more resin impregnated papers;
   - one or more plastic sheets;
   - one or more wood veneers;
   - one or more timber layers;
   - one or more coatings;
   - one or more textured layers;
   - one or more lacquers;
   - one or more foamed layers;
   - one or more print layers.
12. The panel according to paragraph 11, wherein the decorative top layer 6 is attached to said substrate 5 by a separate glue layer 7 or wherein a primer layer 11 is present between the decorative top layer 6 and the substrate 5 to enhance attachment.
13. Method for manufacturing a panel, said panel 1 comprising at least a layer-shaped substrate 5, wherein said method comprises:
   - a basic step wherein base particles and a binder material are brought together and shaped into a plate-shaped material, said base particles comprising comminuted particles from waste comprising rigid foam, for example from waste of insulation panels comprising rigid polyurethane foam or rigid polyisocyanurate foam, and said binder material preferably comprising a glue, and wherein said shaping into a plate-shaped material preferably comprises pressing;
   - optionally a decoration step, wherein at least a decorative layer is applied to said plate-shaped material,
      wherein said plate-shaped material forms the layer-shaped substrate 5 of said panel 1 or further processing steps are performed such that the panel 1 comprises a layer-shaped substrate 5 derived from said plate-shaped material;
      characterized in that said waste further comprises facers, such that the comminuted particles comprise rigid foam material derived from the rigid foam and facer material derived from the facers, wherein for the comminuted particles the weight ratio of the foam material to the sum of the foam material and the facer material, is at most 99 percentage.
14. The method according to paragraph 13, wherein said shaping into said plate-shaped material, comprises at least pressing, preferably pressing with heat, wherein
   - moisture is added before and/or during pressing; and/or
   - current is added during pressing; and/or
   - during the pressing, the temperature builds up to a maximum pressing temperature, and preferably decreases again.
15. The method according to paragraph 13 or 14, wherein said brought together base particles and binder material form a cake, wherein this cake is shaped into said plate-shaped material, and wherein before shaping said cake, the cake has a temperature of more than 30°C, preferably more than 50°C.
16. The method according to any of the preceding paragraphs 13 to 15, wherein said weight ratio of the foam material to the sum of the foam material and the facer material is at least 75 percentage and preferably is located between 85 percentage and 98 percentage.
17. The method according to any of the paragraphs 13 to 16, wherein the facer material comprises paper and/or metal.
18. The method according to any of the preceding paragraphs 13 to 17, wherein the binder material comprises a glue, said glue preferably being chosen from the list of: an isocyanate based glue, for example a poly methylene diphenyl diisocyanate (pMDI) glue, a polyurethane based glue, an epoxy based glue, a formaldehyde based glue, a bio-based glue.
19. The method according to paragraph 18, wherein the weight ratio of the glue to the base particles is located between 3 percentage and 20 percentage, preferably between 5 percentage and 15 percentage.
20. The method according to any of the preceding paragraphs 13 to 19, wherein the base particles comprise fillers separate from the comminuted particles from waste comprising rigid foam, said fillers for example comprising inorganic fillers such as CaCO₃ or talc or silica and/or said fillers for example comprising organic fillers, such as wood fibers.
21. The method according to any of the preceding paragraphs 13 to 20, wherein the binder material comprises a thermoplastic material.
22. The method according to any of the preceding paragraphs 13 to 21, wherein the base particles comprise additives, said additives preferably being one or more additives chosen from the list of:
   - a heat conductive material;
   - a catalysator;
   - a moisture absorbing material.
23. The method according to any of the preceding paragraphs 13 to 22, wherein the substrate 5 comprises at least two sublayers 5A, 5B, 5C, wherein at least one said sublayer, and preferably both said at least two sublayers 5A, 5B, 5C comprises said binder material and said base particles, wherein the composition of said two sublayers 5A, 5B, 5C differs in one or more of the following features:
   - the amount of facer material;
   - the type of facer material;
   - the amount of binder material;
   - the type of binder material;
   - the thickness;
   - the average density;
   - the amount of comminuted particles;
   - the type of comminuted particles;
   - the presence and/or amount of additives and fillers.
24. The method according to any of the preceding paragraphs 13 to 23, wherein the method comprises a decoration step, wherein at least a decorative layer is applied to said plate-shaped material, wherein said decorative layer preferably comprises one or more of the following:
   - one or more resin impregnated papers;
   - one or more plastic sheets;
   - one or more wood veneers;
   - one or more timber layers;
   - one or more coatings;
   - one or more textured layers;
   - one or more lacquers;
   - one or more foamed layers;
   - one or more print layers.
25. The method according to any of the preceding paragraphs 13 to 24, wherein the said comminuted particles from waste comprising rigid foam, are derived from briquettes made from comminuted rigid foam waste, for example from waste of insulation panels comprising rigid polyurethane foam or rigid polyisocyanurate foam.

The present invention is by no means limited to the above-described embodiments, but can be realized according to various variants without departing from the scope of the invention.

## Claims

1. A panel, wherein said panel (1) comprises at least a layer-shaped substrate (5), said substrate (5) comprising base particles and a binding material which bonds said base particles together, wherein said base particles comprise comminuted particles from waste comprising rigid foam, for example waste from insulation panels comprising rigid polyurethane foam or rigid polyisocyanurate foam, **characterized in that** said waste further comprises facers, such that the comminuted particles comprise rigid foam material derived from the rigid foam and facer material derived from the facers, wherein for the comminuted particles the weight ratio of the rigid foam material to the sum of the rigid foam material and the facer material, is at most 99 percentage.

2. The panel according to claim 1, wherein said weight ratio of the foam material to the sum of the foam material and the facer material is at least 75 percentage and preferably is located between 85 percentage and 98 percentage.

3. The panel according to claim 1 or 2, wherein the facer material comprises paper and/or metal, wherein preferably the facer material comprises at least paper.

4. The panel according to any of the preceding claims, wherein the binding material comprises a glue, preferably chosen from the list of: an isocyanate based glue, for example a poly methylene diphenyl diisocyanate (pMDI) glue, a polyurethane based glue, an epoxy based glue, an ureaformaldehyde based glue, a bio-based glue and wherein preferably the layer-shaped substrate (5) has a weight ratio glue upon base particles, situated between 0,03 and 0,20, preferably between 0,05 and 0,15.

5. The panel according to any of the preceding claims, wherein the binding material comprises a thermoplastic based material.

6. The panel according to any of the preceding claims, wherein the panel (1) is rectangular shaped with two opposing main surfaces (2A, 2B) and a first and a second pair of opposite edges (3A, 3B, 4A, 4B) connecting said main surfaces (2A, 2B) wherein, according to a direction from one edge (3A) to another edge (3B) of the first pair of opposite edges (3A, 3B) and parallel to the second pair of opposite edges (4A, 4B), the average density of the substrate (5) varies, for example gradually increases from said one edge (3A) to a central part of the panel (1) and then gradually decreases again from said central part to said other edge (3b) and wherein preferably, the average densities along planes parallel to said direction are substantially constant.

7. The panel according to any of the preceding claims, wherein the base particles comprises one or more additives chosen from the list of:
- a moisture absorbent material, such as a super absorbing material, for example crystals of sodium polyacrylate (SPA);
- a catalysator such as potassium octanoate (KOCT) or potassium acetate;
- a heat conductive material, such as conductive salts.

8. The panel according to any of the preceding claims, wherein the base particles comprise fillers separate from said comminuted particles from waste comprising rigid foam material, said fillers for example comprising inorganic fillers such as CaCO₃ or talc or silica and/or said fillers for example comprising organic fillers, such as wood fibers.

9. The panel according to any of the preceding claims, wherein the layer-shaped substrate (5) comprises at least two sublayers (5A, 5B, 5C), wherein at least one said sublayer and preferably both said at least two sublayers (5A, 5B, 5C) comprise said base particles and a said binder material, wherein the composition of said two sublayers (5A, 5B, 5C) preferably differs in one or more of the following features:
- the amount of facer material and/or the type of facer material;
- the amount of binder material and/or the type of binder material;
- the amount of said comminuted particles and/or the properties of the comminuted particles;
- the thickness;
- the average density;
- the presence and/or amount of other material than the comminuted particles and the binder material, such as additives and fillers.

10. The panel according to any of the preceding claims, wherein the panel (1) comprises a decorative top layer (6) attached to said substrate (5), said decorative top layer (6) preferably comprising one or more of the following:
- one or more resin impregnated papers;
- one or more plastic sheets;
- one or more wood veneers;
- one or more timber layers;
- one or more coatings;
- one or more textured layers;
- one or more lacquers;
- one or more foamed layers;
- one or more print layers.
and wherein preferably the decorative top layer (6) is attached to said substrate (5) by a separate glue layer (7) or wherein a primer layer (11) is present between the decorative top layer (6) and the substrate (5) to enhance attachment.

11. Method for manufacturing a panel, said panel (1) comprising at least a layer-shaped substrate (5), wherein said method comprises:
- a basic step wherein base particles and a binder material are brought together and shaped into a plate-shaped material, said base particles comprising comminuted particles from waste comprising rigid foam, for example from waste of insulation panels comprising rigid polyurethane foam or rigid polyisocyanurate foam, and said binder material preferably comprising a glue, and wherein said shaping into a plate-shaped material preferably comprises pressing;
- optionally a decoration step, wherein at least a decorative layer is applied to said plate-shaped material,
wherein said plate-shaped material forms the layer-shaped substrate (5) of said panel (1) or further processing steps are performed such that the panel (1) comprises a layer-shaped substrate (5) derived from said plate-shaped material;
**characterized in that** said waste further comprises facers, such that the comminuted particles comprise rigid foam material derived from the rigid foam and facer material derived from the facers, wherein for the comminuted particles the weight ratio of the foam material to the sum of the foam material and the facer material, is at most 99 percentage.

12. The method according to claim 11, wherein said shaping into said plate-shaped material, comprises at least pressing, preferably pressing with heat, wherein
- moisture is added before and/or during pressing; and/or
- current is added during pressing; and/or
- during the pressing, the temperature builds up to a maximum pressing temperature, and preferably decreases again.

13. The method according to claim 11 or 12, wherein said brought together base particles and binder material form a cake, wherein this cake is shaped into said plate-shaped material, and wherein before shaping said cake, the cake has a temperature of more than 30°C, preferably more than 50°C.

14. The method according to any of the preceding claims 11 to 13, wherein said weight ratio of the foam material to the sum of the foam material and the facer material is at least 75 percentage and preferably is located between 85 percentage and 98 percentage.

15. The method according to any of the preceding claims 11 to 14, wherein the binder material comprises a glue, said glue preferably being chosen from the list of: an isocyanate based glue, for example a poly methylene diphenyl diisocyanate (pMDI) glue, a polyurethane based glue, an epoxy based glue, a formaldehyde based glue, a bio-based glue and wherein preferably the weight ratio of the glue to the base particles is located between 3 percentage and 20 percentage, preferably between 5 percentage and 15 percentage.
